# EUROPÄISCHE PATENTSCHRIFT

(11) **EP 3 538 960 B1**
(45) Veröffentlichungstag und Bekanntmachung des Hinweises auf die Patenterteilung: **23.03.2022**
(21) Anmeldenummer: 17794752.0
(22) Anmeldetag: 10.11.2017
(51) Int. Cl.: G05B 19/414, G06F 9/48, G05B 19/05

(54) **ABLAUFSTEUERUNG VON PROGRAMMMODULEN**
SEQUENCE CONTROL OF PROGRAM MODULES
COMMANDE DE DÉROULEMENT DE MODULES DE PROGRAMME

(30) Priorität: 10.11.2016 LU 93299
(43) Veröffentlichungstag der Anmeldung: 18.09.2019
(73) Patentinhaber: Phoenix Contact GmbH & Co. KG, 32825 Blomberg (DE)
(72) Erfinder: HEUTGER, Henning, 31812 Bad Pyrmont (DE); KLEINOW, Rolf, 33619 Bielefeld (DE); WEICHELT, Andreas, 32278 Kirchlengern (DE); HAUSMANN, Stefan, 32657 Lemgo (DE); FRIEBEN, Jens, 33106 Paderborn (DE)
(74) Vertreter: Blumbach · Zinngrebe Patentanwälte PartG mbB
(86) Internationale Anmeldenummer: PCT/EP2017/078931
(87) Internationale Veröffentlichungsnummer: WO 2018/087314

(56) Entgegenhaltungen:
- EP-A2- 3 076 297
- WO-A1-2009/037198
- WO-A1-2013/010159

## Beschreibung

Die vorliegende Erfindung liegt auf dem Gebiet der Automatisierungstechnik, insbesondere der industriellen Automatisierungstechnik, und betrifft ein Verfahren zur Ablaufsteuerung von Programmmodulen. Ferner betrifft die vorliegende Erfindung ein Echtzeitbetriebssystem, eine Steuereinheit, eine Steuervorrichtung und ein Computerprogrammprodukt.

In der Automatisierungstechnik ist ein Wandel abzusehen, der von der Verwendung von klassischen Programmiersprachen hin zum Einsatz von Hochsprachen erfolgt.

Bisher regelt beispielsweise die Norm IEC 61131 die Syntax und die Semantik von Programmiersprachen für programmierbare Controller. Hierbei wird eine vereinheitlichte Suite von Programmiersprachen für programmierbare Controller vorgeschlagen. Diese Suite weist zwei Textsprachen (Instruction List und Structured Text) sowie zwei graphische Sprachen (Ladder Diagram und Function Block Diagram) auf. Ferner werden in der Norm IEC 61131 Merkmale definiert, die die Kommunikation zwischen Programm-Controllern und weiteren Komponenten eines automatisierten Systems vereinfachen.

Durch aktuelle Thematiken, wie beispielsweise Industrie 4.0, dem Internet der Dinge oder Agenda CPS des VDI, wird aufgezeigt, dass sich in Zukunft automatisierte Anlagen durch einen hohen Teil von Vernetzung und Software auszeichnen werden. Dabei wird es einen Wechsel von der klassischen IEC 61131-3 Programmierung hin zu modernen Hochsprachen geben. Bis zum Jahr 2018 soll der verwendete Code rund 70% außerhalb der nach IEC definierten Sprachen liegen. Dabei werden die bestehenden Anforderungen, wie zum Beispiel Echtzeitfähigkeit und Konsistenz, um höhere Flexibilität, mehr Sicherheit und bessere Wartbarkeit ergänzt.

Auch bei der Herstellung von speicherprogrammierbaren Steuerungen und/oder Laufzeitumgebungen ergeben sich folglich technische Veränderungen in der Zukunft.

EP 3 076 297 A2 beschreibt eine Steuerung, welche dazu ausgebildet ist, Steuerprogramme unter Verwendung eines Multicore-Prozessors parallel in kürzeren Zyklen auszuführen, wobei Kommunikationskollisionen dadurch vermieden werden, dass der zeitliche Ablauf der Kommunikation der Steuerprogramme in Abhängigkeit von Prioritäten erfolgt, die den Steuerprogrammen zugeordnet werden.

In WO 2009/037198 A1 wird ein Leittechniksystem für eine technische Anlage und ein Verfahren zum Betreiben eines leittechnischen Systems beschrieben, wobei eine Ablaufumgebung vorgesehen ist, in der unterschiedliche, insbesondere unterschiedliche parametrierbare, Task Manager oder Scheduler eingesetzt werden können, wobei dazu vorgesehen ist, unter Abkehr vom etablierten Prinzip der Nutzung der Echtzeit als fest verankerter Auslöseparameter im Kontrollmodul einen editierbaren oder vom Nutzer veränderbaren Auslöseparameter zur Ablaufsteuerung über das Kontrollmodul einzusetzen.

WO 2013/ 010159 A1 beschreibt ein Verfahren zum parallelen Ausführen einer Steuerapplikation auf einem Mehrkern-Prozessor, wobei eine Analyse der Datenabhängigkeit durchgeführt wird, um Tasks zu identifizieren, die parallel ausgeführt werden können (D3, Abstract).

EP 2 504 738 B1 beschreibt ein Steuerverfahren und ein Verfahren zum Ausführen mehrerer Programme auf mehreren parallel arbeitenden Verarbeitungseinrichtungen. Hierbei ist ein Zeitsignalgeber jeder von mehreren parallel arbeitenden Verarbeitungseinrichtungen zugeordnet, bei dessen Ablaufen auf der zugeordneten Verarbeitungseinrichtung ein Steuerverfahren zum Ausführen von Programmen ausgeführt wird.

Die Verwendung eines Zeitsignalgebers hat jedoch den Nachteil, dass die Schnelligkeit der Verarbeitung von Daten in einem Echtzeitbetriebssystem herabgesetzt werden kann.

Es ist eine Aufgabe der vorliegenden Erfindung, eine Lösung anzugeben, um Ablaufsteuerungen für Echtzeitbetriebssysteme zu verbessern.

Diese Aufgabe wird erfindungsgemäß durch die Merkmale des Patentanspruchs 1 gelöst. Ferner wird die Aufgabe durch ein Steuergerät gemäß Patentanspruch 12, ein Computerprogrammprodukt gemäß Patentanspruch 13 und einen Datenträger gemäß Patentanspruch 14 gelöst. Weitere Ausgestaltungen ergeben sich aus den Unteransprüchen.

Bei dem erfindungsgemäßen Verfahren zur Ablaufsteuerung von Programmmodulen wird ein Bereitstellen einer Steuereinrichtung und ein Bereitstellen einer Beschreibungsdatei aufweisend ein Konfigurieren der Beschreibungsdatei zur Steuerung eines Programmablaufs vorgesehen. Ferner umfasst das Verfahren ein Bereitstellen mehrerer Programmmodule, die von einem Echtzeitbetriebssystem ausführbar sind, wobei die Programmmodule unter Verwendung einer oder unterschiedlicher Programmiersprachen erstellt sind. Weiterhin weist das Verfahren ein Auslösen ausgewählter Programmmodule durch Ausführen von Vorgaben in der Beschreibungsdatei durch die Steuereinrichtung auf.

Die Steuereinrichtung wird als Teil der Firmware einer Steuervorrichtung bereitgestellt, wobei die Steuervorrichtung insbesondere als Steuergerät zur Steuerung eines Automatisierungssystems ausgebildet ist. Beispielsweise dient die Steuervorrichtung zum Einlesen von Sensordaten und zur Steuerung von Aktoren in Abhängigkeit der Sensordaten. Zu diesem Zweck wird auf der Steuervorrichtung eine Steuerungsapplikation ausgeführt. Das Ausführen der Steuerungsapplikation, d.h. der Gesamtapplikation, umfasst das Ausführen der mehreren Programmmodule. Die Ablaufsteuerung der Programmodule erfolgt durch die Steuereinrichtung, welche zu diesem Zweck ausgewählte Programmmodule durch Ausführen von Vorgaben in der Beschreibungsdatei auslöst.

Das Auslösen eines Programmmoduls bezeichnet das Ausführen bzw. das Initiieren der Ausführung eines Programmmoduls, wobei das Programmmodul insbesondere als in einem Speicher abgelegter, von einem Echtzeitbetriebssystem ausführbarer Programmcode bereitgestellt wird. Zum Auslösen eines Programmmoduls wird von der Steuereinrichtung vorzugsweise eine entsprechende Funktion des Betriebssystems aufgerufen. Welche Programmodule in welcher Reihenfolge und in Abhängigkeit welches Ereignisses oder in welchen Zeitintervallen von der Steuereinrichtung ausgelöst werden, wird durch die Inhalte der Beschreibungsdatei vorgegeben. Zu diesem Zweck umfasst die Beschreibungsdatei beispielsweise Informationen zur Identifikation eines Programmoduls sowie zugeordnete Informationen, welche beispielsweise eine zyklische Ausführung und eine zugeordnete Zykluszeit vorgeben. Vorteilhaft können in der Beschreibungsdatei auch Aufgaben definiert werden, denen Programmodule zugeordnet sind.

Die Beschreibungsdatei wird insbesondere in Form einer Textdatei in einem Speicher einer Steuervorrichtung bereitgestellt und bei Inbetriebnahme bzw. Einschalten der Steuervorrichtung von der Steuereinrichtung als Teil der Firmware der Steuervorrichtung eingelesen. Der in der Beschreibungsdatei vorgegebene Ablauf der Programmodule wird von der Steuereinrichtung durch Aufrufen entsprechender Betriebssystemfunktionen gesteuert.

Die Steuereinrichtung kann als Ausführungs- und Synchronisierungs-Manager bzw. Execution and Synchronisation Manager (ESM) ausgestaltet sein.

Durch das Verwenden einer solchen Steuereinrichtung wird eine gleichwertige Behandlung bzw. Ausführung von Programmen unterschiedlicher Programmierdomänen ermöglicht.

Es können beispielsweise Programmmodule ausgeführt werden, die jeweils mindestens in einer der Programmiersprachen nach der Norm IEC 61131, in Matlab/Simulink, C++, C# oder JAVA oder Python programmiert ist. Weitere Programmiersprachen sind ebenfalls möglich. Nach der Norm IEC 61131 (Ausgabe 3.0, 2013-02) werden zwei Textsprachen (textual languages), nämlich Instruction List (IL) und Structured Text (ST) und zwei Graphiksprachen (graphical languages), nämlich Ladder Diagram (LD) und Function Block Diagram (FBD) vorgegeben. Diese Programmiersprachen können zusammen mit Programmierhochsprachen in einer Ablaufsteuerung angewendet werden.

Die Steuereinrichtung erlaubt eine einfache Konfiguration von IEC 61131-3 ähnlichen Tasks, welche das Einbinden von Programminstanzen unterschiedlicher Programmiersprachen erlaubt. Hierfür nutzt die Steuereinrichtung eine Reihe von Betriebssystemprozessen und Threads, um eine performante Integration in das unterliegende Echtzeitbetriebssystem zu ermöglichen.

Demnach kann für alle Programmmodule eine einzige Programmiersprache verwendet werden. Auch ist es möglich, dass für zwei oder mehrere Programmmodule unterschiedliche Programmiersprachen verwendet werden.

Beim Auslösen der Programmmodule wird die Beschreibungsdatei, die auch als Konfigurationsdatei bezeichnet werden kann, nicht mehr angesprochen. Ein solches Ansprechen würde zu viel Zeit in Anspruch nehmen und verlangsamt die Bearbeitung. Vielmehr wird beim Systemstart die Konfigurationsdatei(en) gelesen und während der Abarbeitungsphase nur noch ausgeführt. Hierbei wird ein Ausführen der Informationen aus der Beschreibungsdatei durch die Steuereinrichtung vorgesehen. Somit ergeben sich Vorgaben zur Ausführung der Programmodule durch den Inhalt der Beschreibungsdatei. Diese Vorgaben werden durch ein Konfigurieren der Beschreibungsdatei bereitgestellt. Folglich werden die Programmmodule unter Ausführen in der Beschreibungsdatei definierten Konfiguration ausgelöst.

Die in der Beschreibungsdatei definierte Konfiguration umfasst beispielsweise zu ausgewählten Programmodulen jeweils eine Identifikation, zum Beispiel einen Namen, unter welchem das Programmodul gespeichert ist, sowie zugeordnete Informationen zur Ausführung des jeweils identifizierten Programmoduls, d.h. beispielsweise, ob das Programmmodul zyklisch oder ereignisgesteuert ausgeführt werden soll. Die Steuereinrichtung ist zum Auswerten der in der Beschreibungsdatei enthaltenen Informationen ausgebildet und führt die ausgewählten Programmmodule in Abhängigkeit der in der Beschreibungsdatei angegebenen Konfigurationsinformationen aus, wobei die in der Beschreibungsdatei jeweils enthaltene Identifikation dazu geeignet ist, das jeweilige Programmmodul mit Hilfe einer Betriebssystemfunktion auszulösen, d.h. auszuführen.

Die Programmmodule werden beispielsweise mit Hilfe einer Programmierschnittstelle, insbesondere mit einer API (API = application programming interface) gesteuert. Die Beschreibungsdatei, die beispielsweise als XML-Datei (XML = Extensible Markup Language Datei) bereitgestellt werden kann, dient der Konfiguration, wann die Programme angesprochen und damit ausgeführt werden. Es können mit Hilfe der Steuereinrichtung Programmmodule ausgeführt und Statusinformationen zum Programmablauf, z.B. Tasklaufzeiten, erfasst werden.

Die Steuereinrichtung kann selbst von einem PLC-Manager (PLC = Programmable Logic Controller) initialisiert und gesteuert werden. Dieser setzt z.B. die Steuerung in RUN/STOP und führt Neustarts durch. Während des Betriebs wird die Steuereinrichtung durch Events (Software oder Hardware) zyklisch angestoßen, um eine Ausführungslogik abzuarbeiten.

Auch können eine Vielzahl von Beschreibungsdateien bzw. Konfigurationsdateien zur Ablaufsteuerung verwendet werden. Weitere Beschreibungsdateien können eine Konfiguration von zusätzlichen Task und ihren zugeordneten Programmmodulen beinhalten. Beispielsweise könnte eine Beschreibungsdatei beispielsweise in Form einer XML-Datei, eine Hauptaufgabe (Task-Main) beschreiben, eine weitere Beschreibungsdatei eine Steueraufgabe (Task-Crtl) und eine weitere Beschreibungsdatei eine Synchronisationsaufgabe (Task-Sync). Die Konfigurationsdateien können einfach in eine Konfiguration zusammengeführt werden, wenn sich hieraus keine Widersprüche ergeben. Aus diesem Grund sollte die Steuereinrichtung oder eine Steuereinrichtung in der Funktion eines Masters (ESM-Master) alle Konfigurationen kennen und einlesen.

In einer bevorzugten Ausführungsform weist das Verfahren ein mehrfaches Auslösen wenigstens eines der Programmmodule durch die Steuereinrichtung auf.

Ein Ansprechen der Beschreibungsdatei ist hierfür nicht notwendig, so dass Bearbeitungszeiten kurz gehalten werden können. Weitere Aufgabentypen bzw. Tasktypen wie Event und Idle Task können ebenfalls unterstützt werden. Die Beschreibungsdatei oder die Vielzahl von Beschreibungsdateien werden vorteilhafterweise nur zur initialen Konfiguration gelesen, nicht jedoch während der Ausführung.

In einer weiteren bevorzugten Ausführungsform des Verfahrens ist vorgesehen, dass die Steuereinrichtung dazu ausgebildet ist, wenigstens einige der Programmmodule derart auszulösen, dass sie in unterschiedlichen von dem Echtzeitbetriebssystem verwalteten Prozessen ausführbar sind.

Auf diese Weise ist es möglich, nur die Programmmodule zu verwenden, die benötigt werden und auch Prozesse parallel auszuführen, um Zeitressourcen effizient zu nutzen.

In einer Weiterbildung des Verfahrens ist vorgesehen, dass das Echtzeitbetriebssystem dazu ausgebildet ist, die Prozesse und/oder Programmmodule in Abhängigkeit vorbestimmter Prioritäten auszuführen.

Durch ein Setzen von Prioritäten können Steueraufgaben nach ihrer Wichtigkeit oder Dringlichkeit bearbeitet werden.

Ferner kann bei einer Ausführungsform des Verfahrens ein Aufzeichnen und Auswerten der Ablaufsteuerung durch das Echtzeitbetriebssystem vorgesehen werden.

Zum Aufzeichnen und Auswerten können zusätzlich eingebrachte Markierungspunkte mit aufgezeichnet werden und Statistiken gebildet werden.

In einer weiteren Ausgestaltungsform kann das Verfahren ein Erweitern der Ablaufsteuerung durch ein zusätzliches Programmmodul vorsehen, ohne dass ein Neustart eines Steuerungssystems durchgeführt wird.

Ein Steuerungssystem bezeichnet eine Ablaufsteuerung in der Programmmodule typischerweise geladen, gestartet, debuggt, gestoppt und entladen werden können. Das Steuerungssystem setzt auf dem Echtzeitbetriebssystem auf.

Es ist von Vorteil, dass eine Erweiterung des Steuerungssystems möglich ist, ohne dass das Steuerungssystem für einen Neustart unterbrochen werden muss. Auf diese Weise kann der Betrieb kontinuierlich fortgeführt werden.

In einer weiteren Ausführungsform kann das Verfahren ein Aufteilen der Ablaufsteuerung auf verschiedene Prozesse aufweisen.

Eine solche Verteilung kann die Vorteile unterschiedlicher Prozesse des Echtzeitbetriebssystems, z.B. Speicherschutzmechanismen, besser ausnutzen.

Ferner kann in einer weiteren Ausführungsform des Verfahrens ein Erstellen einer Statistikauswertung unter Verwendung von Profiling-Informationen vorgesehen werden.

Hierbei können in der Steuereinrichtung Marken oder Markierungen eingebracht werden, um die Profiling-Informationen zu generieren. Unter Profiling-Informationen werden Informationen zur Analyse des Laufzeitverhaltens von Software verstanden. Demnach können statistische Daten zur Verbesserung der Ablaufsteuerung ausgewertet und für statistische Zwecke verwendet werden.

In einer weiteren Ausgestaltungsform umfasst das Verfahren ein Einbringen von mindestens einer Aufzeichnungsmarkierung in ein Programmmodul zum Bereitstellen einer Applikationsdiagnose.

Eine Aufzeichnungsmarkierung kann als Stelle in einem Programmmodul verstanden werden, die es ermöglicht, über einen bestimmten Teil eines Programmmoduls Information in Bezug auf dessen Ausführung zu erhalten. Anhand dieser Information kann im Anschluss eine Diagnose erstellt werden, um die ausgeführte Applikation zu bewerten. Hierbei kann es sich um eine einzelne Applikation oder auch die Gesamtapplikation der Steueraufgabe handeln.

In einer weiteren Ausführungsform umfasst das Verfahren ein Verwenden der Steuereinrichtung als Master und Bereitstellen mindestens einer weiteren Steuereinrichtung als Slave, die der Steuereinrichtung als Master untergeordnet ist.

Die Verwendung eines Slaves kann dann vorteilhaft verwendet werden, wenn ein Programmmodul in einem weiteren Prozess ausgeführt werden soll. Wenn die Gesamtapplikation in einem einzigen Prozess abläuft, kann auf einen Slave verzichtet werden.

Aufgaben bzw. Tasks sind eine organisatorische Einheit für die Ausführung von Programmen. OS-Prozesse und OS-Threads (OS = Operating System bzw. Betriebssystem) können für die technische Realisierung dieser organisatorischen Verwaltungseinheiten genutzt werden. Hierbei ist es erstrebenswert, eine synchronisierte Abarbeitung von Tasks über OS-Prozessgrenzen hinweg zu ermöglichen. Dem Master ist es im Allgemeinen nicht möglich, OS-Threads in anderen OS-Prozessen zu erstellen. Aus diesem Grund kann dies von einem Slave in jedem beteiligten OS-Prozess übernommen werden. Die Ausführung der Programme bzw. Programmmodule kann der Master übernehmen. Wird hingegen nur ein OS-Prozess verwendet, können alle Programme und Threads ohne Slaves ausgeführt werden.

Der Master und der Slave können beispielsweise über Interprozesskommunikation kommunizieren, wenn diese auf demselben Gerät ablaufen. Die Kommunikation wird vorteilhafterweise auf der untersten Ebene mit Basisfunktionalitäten des Betriebssystems realisiert.

Weiterhin kann das Verfahren in einer weiteren bevorzugten Ausgestaltungsform ein Zuweisen einzelner in der Beschreibungsdatei definierter Aufgaben an Programmmodule durch die Steuereinrichtung aufweisen.

Demnach kann die Steuereinrichtung einzelne Aufgaben innerhalb des Steuerungssystems verteilen, um so beispielsweise die Auslastung des Steuerungssystems zu verbessern. Eine Aufgabe bzw. Task oder eine Vielzahl hiervon kann eine Untermenge eines Prozesses innerhalb einer Steueraufgabe sein.

Ein beispielhaftes Echtzeitsystem zur Ablaufsteuerung von Programmmodulen umfassend eine Steuereinrichtung weist eine in einer Speichereinrichtung hinterlegte Beschreibungsdatei auf, die einen Programmablauf definiert. Ferner sind mehrere von dem Echtzeitbetriebssystem ausführbare Programmmodule vorgesehen, die unter Verwendung einer oder unterschiedlicher Programmiersprachen erstellt sind, wobei die Steuereinrichtung dazu ausgebildet ist, die Programmmodule unter Ausführen von Vorgaben der Beschreibungsdatei auszulösen.

Das Echtzeitbetriebssystem (RTOS = real-time operating system) ist ein Betriebssystem, das in der Lage ist, Echtzeit-Anforderungen von Anwendungen zu erfüllen. Hierbei ist die Einhaltung definierter Antwortzeiten im Bereich der Automatisierungstechnik von besonderer Bedeutung, um Schäden an einer installierten und gesteuerten Anlage zu vermeiden.

Die Steuereinrichtung kann in Form eines Ausführungs- und Synchronisierungs-Manager bzw. Execution and Synchronisation Managers (ESM) ausgestaltet sein. Die Steuereinrichtung kann zentrale Aufgaben der Steuerung priorisieren, auf vorhandene Programmmodule verteilen und Informationen von den einzelnen Programmmodulen empfangen und diese Informationen analysieren.

Ferner wird die Aufgabe der vorliegenden Erfindung durch eine Steuervorrichtung zur Ablaufsteuerung von Programmmodulen unterschiedlicher Programmiersprachen in einem Echtzeitbetriebssystem gelöst. Hierzu weist die Steuervorrichtung eine erfindungsgemäße Steuereinrichtung, einen Prozessor, einen Speicher, und mindestens eine Schnittstelle zu einer Automatisierungseinrichtung auf.

Hierbei kann eine Steuervorrichtung ein Steuergerät sein, das in einer Automatisierungsanlage installiert ist. Hierbei ist die erfindungsgemäße Steuereinrichtung Teil der erfindungsgemäßen Steuervorrichtung. Auch ist eine instanzierende Verteilung bzw. Instanzierung der Steuereinrichtung auf mehrere Rechnerkerne bzw. Cores eines Multicoreprozessors möglich.

Desweiteren wird die Aufgabe der vorliegenden Erfindung mit einem Computerprogrammprodukt gelöst. Hierzu weist das Computerprogrammprodukt Programmcodemittel zum Durchführen des erfindungsgemäßen Verfahrens auf, wobei das Computerprogrammprodukt auf einem Computersystem in einem Echtzeitbetriebssystem abläuft.

Das Computerprogrammprodukt kann beispielsweise ein Datenträger sein, der in einer Automatisierungsanlage zur Verfügung gestellt wird, um das erfindungsgemäße Verfahren durchzuführen.

Insgesamt bietet die vorgeschlagene Steuerungstechnik eine flexible Lösung, die sich dynamisch der zukünftigen Weiterentwicklung im Bereich der Automatisierungstechnik anpassen kann. Die vorgeschlagene Steuerungsarchitektur erlaubt durch ihre Offenheit, im Gegensatz zu bisher geschlossenen Systemen, ganz individuell die gewünschten Applikationen umzusetzen und dennoch auf einer stabilen Basis aufzusetzen. Dies kann nicht nur für die Zielgruppe der Hochsprachenprogrammierer, sondern auch für bisherige installierte Automatisierungsanlagen im Umfeld der IEC 61131-3 Programmierung sicherstellt werden.

Einige Ausführungsbeispiele der Erfindung sind in den Zeichnungen rein schematisch dargestellt und werden nachfolgend näher beschrieben. Es zeigt:
- Fig. 1: ein Ausführungsbeispiel zur Steuerung einer Gesamtapplikation in einer Automatisierungsanlage gemäß der vorliegenden Erfindung;
- Fig. 2: ein Ausführungsbeispiel der vorliegenden Erfindung eines schematischen Aufbaus mit einer Steuereinrichtung als Master und zwei weiteren Steuereinrichtungen als Slave;
- Fig. 3: ein Ausführungsbeispiel gemäß der vorliegenden Erfindung einer Steuerung eines Programmablaufs durch eine Steuereinrichtung;
- Fig. 4: ein Ausführungsbeispiel der vorliegenden Erfindung eines schematischen Aufbaus mit einer Steuereinrichtung.

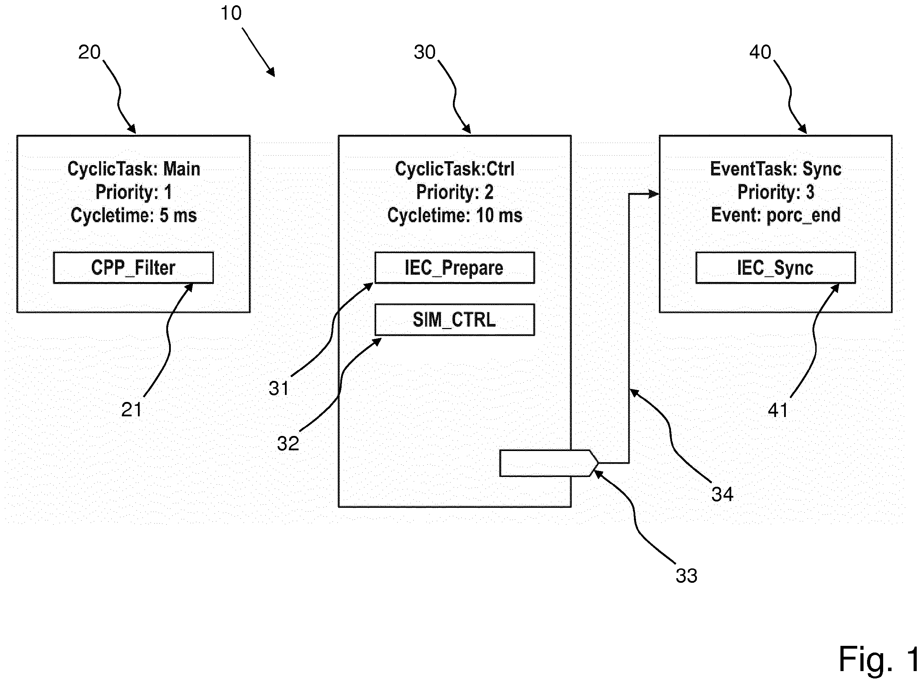

Fig. 1 zeigt ein Ausführungsbeispiel zur Steuerung einer Gesamtapplikation 10 in einer Automatisierungsanlage gemäß der vorliegenden Erfindung.

Unter einer Gesamtapplikation werden in diesem Zusammenhang alle Programme bzw. Programmmodule, Aufgaben bzw. Tasks und Konfigurationseinstellungen verstanden, die zur Ausführung auf einem Steuerungsgerät benötigt werden. Dabei ist es nicht relevant, ob das Steuergerät bzw. die Steuerung die einzige ist oder eine von mehreren Geräten ist.

Typisch für eine Automatisierung ist die zyklische Abarbeitung von Programmen bzw. von Programmmodulen. Eine Rückmeldung an den Anwender bzw. User wird typischerweise nicht im Rahmen dieser Zyklen gegeben.

In Fig. 1 ist ein schematischer Aufbau von drei Aufgaben 20, 30, 40 bzw. Tasks dargestellt, welche insgesamt vier Programme bzw. Programmmodule 21, 31, 32, 41 aus den Domänen IEC 61131-3, C++ und Matlab/Simulink synchronisiert ausführen. Das Programmmodul 21 ist ein CPP-Filter und in der Programmiersprache C++ programmiert. Das Programmmodul 31 ist ein IEC-Prepare-Programm und in einer der Programmiersprachen nach der IEC-Normierung programmiert. Das Programmmodul 32 ist ein SIM-CTRL-Programm, d.h. ein Steuerprogramm, und ist in der Programmiersprache Matlab/Simulink programmiert. Das Programmodul 41 ist ein IEC-Sync-Programm, d.h. ein Synchronisationsprogramm, und ist in einer der Programmiersprachen nach der IEC-Normierung programmiert. In diesem Zusammenhang werden die Begriffe "Programm" und "Programmmodul" austauschbar verwendet.

Nach dem Prozedur-Ende bzw. Prozessende des Programmmoduls 30 wird über eine Schnittstelle 33 über eine Kommunikationsverbindung 34 die Aufgabe 40 mit dem Programmmodul 41 veranlasst zu starten.

Die Aufgaben 20, 30, 40 der Fig. 1 haben zur Ausführung der Gesamtapplikation 10 unterschiedliche Prioritäten, wobei die Aufgabe 20 als Hauptaufgabe bzw. Main Task die niedrigste Priorität aufweist, die Aufgabe 30 als Steueraufgabe bzw. Ctrl-Task eine mittlere Priorität aufweist und die Aufgabe 40 als Ereignis-Aufgabe bzw. Event-Task mit Synchronisations-Aufgaben die höchste Priorität aufweist. Ferner weist die Aufgabe 20 eine Zykluszeit bzw. Cycletime von 5 ms (ms = Millisekunden), und die Aufgabe 30 von 30 ms auf. Die Aufgabe 40 wird einmalig ausgeführt und endet, wenn das Programmmodul 41 bzw. das Programm im Programmmodul abgearbeitet ist (event: proc_end).

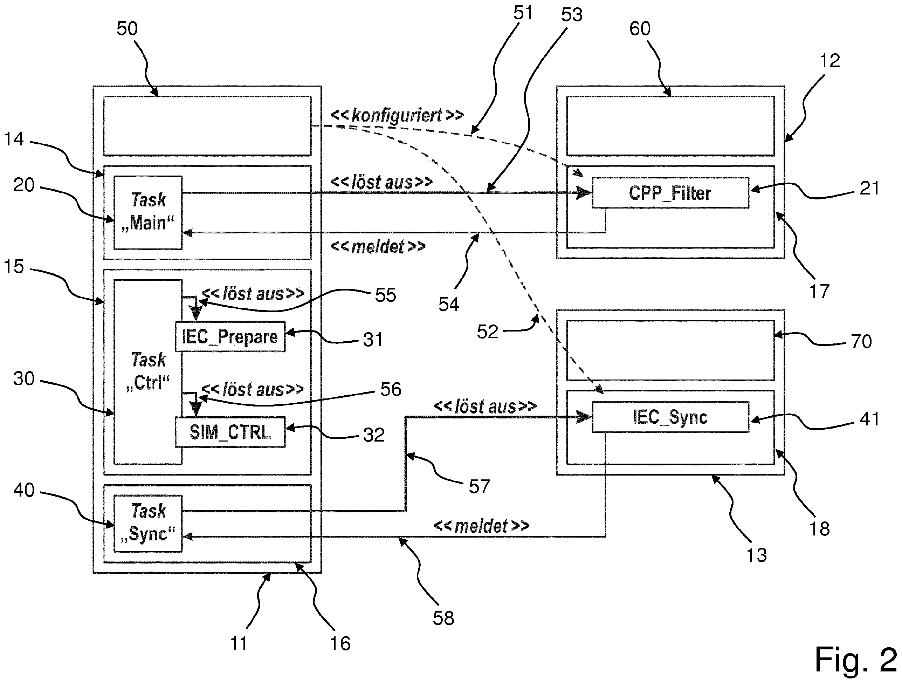

Fig. 2 zeigt ein Ausführungsbeispiel der vorliegenden Erfindung eines schematischen Aufbaus mit einer Steuereinrichtung 50 als Master, einer dem Master untergeordneten Steuereinrichtung 60 als ersten Slave und einer weiteren dem Master untergeordneten Steuereinrichtung 70 als zweiten Slave. Hierbei werden die Masterkomponente - und Slave-Komponenten 50, 60, 70 verwendet, um in unterschiedlichen Prozessen Programmmodule aus unterschiedlichen Programmdomänen zu koordinieren. Ferner sind in Fig. 2 unterschiedliche Betriebssystem-Prozesse bzw. OS-Prozesse 11, 12, 13 dargestellt, die jeweils OS-Threads 14, 15, 16, 17, 18 aufweisen.

Die erfindungsgemäße Vorgehensweise erlaubt die Komposition heterogener Taskinhalte. Dabei ist die Abarbeitungsreihenfolge innerhalb einer Aufgabe frei wählbar, nicht systembedingt vorgegeben und ein konsistenter Datenaustausch zwischen Programminstanzen möglich.

Die Konfiguration des Masters 50 und seiner Aufgaben 20, 30, 40 erfolgt durch eine oder mehrere Beschreibungsdateien, hier in Form einer oder mehrere XML-Dateien, die das Konfigurieren statt Programmieren erlauben. Damit kann die Funktion einer Anlage zur Laufzeit verändert werden, ohne dass die einzelnen Applikationsteile neu übersetzt werden müssen. Auch erlaubt es die Beschreibungsdatei bzw. die XMLbasierte Konfiguration dem Benutzer, Anpassungen direkt an der Steuerung vorzunehmen oder eigene externe Werkzeuge und Toolchains zu verwenden.

Der Aufbau der Beschreibungsdatei, insbesondere in Form einer XML-Datei, kann dabei durch klar definierte Schemadateien vorgegeben werden, welche eine schnelle Überprüfung der Konfiguration ermöglicht. Die Spezifikation von Aufgaben und den zugehörigen Programminstanzen in mehreren Beschreibungsdateien bzw. XML-Konfigurationsdateien erlaubt die Aufteilung der Gesamtapplikation 10 in funktionale Module, die von unterschiedlichen Entwicklergruppen oder Zulieferern erstellt werden können. Dies erleichtert nicht nur die Entwicklung einer komplexen Anlagensteuerung, sondern auch die schrittweise Erweiterung einer laufenden Anlage. Somit muss die Gesamtapplikation 10 nicht von Anfang an zur Verfügung stehen, sondern kann aus Teilmodulen komponiert werden.

Jeder Aufgabe 20, 30, 40 lässt sich zusätzlich durch die Definition von Parametern in der Beschreibungsdatei bzw. XML-Datei auf einen Prozessorkern, eine Gruppe oder auf allen Prozessorkernen der Steuerung zuordnen.

Ein flexibles System aus Master- und Slave-Komponenten 50, 60, 70 erlaubt dem Benutzer zudem die Ausführung von Programmen über Prozessgrenzen hinweg. Dies ist eine vorteilhafte Voraussetzung für die Trennung von Programmen unterschiedlicher Benutzer, welche so in gekapselten Speicherbereichen ausgeführt werden. Als Basis hierfür können die Speicherschutzmechanismen des unterliegenden Echtzeitbetriebssystems dienen. Aus Sicherheitsgründen ist es somit möglich, den Zugriff von Programmen bzw. Programmmodulen entsprechend der Benutzerrechte einzuschränken.

In Fig. 2 konfiguriert der Master 50 über Wirkverbindungen 51, 52 jeweils ein Programmmodul 21, 41 eines Slaves 60, 70. Hierbei bezieht sich konfigurieren auf die Bereitstellung einer Prioritäts-Information durch den Master 50. Ferner sind in Fig. 2 Kommunikationsverbindungen 53, 54, 57, 58 vorhanden, um zwischen den einzelnen Programmmodulen 21, 31, 32, 41 und einer Aufgabe 20, 30, 40 Befehle und Informationen oder Rückmeldungen auszutauschen. Hierbei werden die Informationen zwischen Master und Slave-Instanzen hin- und zurückgesendet bzw. jeweils empfangen. Befehle sind beispielsweise Auslösebefehle ("löst aus") von der Aufgabe 20, 40 an das Programmmodul 21, 41. Rückmeldungen werden beispielsweise von den Programmodulen 21, 41 an die Aufgaben 20, 40 gesendet ("meldet"). Ferner werden Auslösebefehle ("löst aus") auch von der Aufgabe 30 jeweils an die Programmmodule 31, 32 über die Kommunikationsverbindungen 55, 56 gesendet, wobei die Kommunikation innerhalb eines OS-Threads stattfindet.

Mit der vorgeschlagenen Vorgehensweise ist es möglich, die bekannten Tasks aus der IEC-Normierung in die Hochsprachenwelt zu übertragen. Daher unterstützt die Steuereinrichtung aktuell zyklische Tasks, Idle Tasks und eventbasierte Tasks, welche auf die prioritätsgesteuerten Prozesse und Threads des Echtzeitbetriebssystems abgebildet werden. Neben dieser prioritätsgesteuerten Ausführung ermöglicht die Steuereinrichtung auch die Taskausführung in Reaktion auf das Auftreten eines speziellen Events. Mit diesem frei konfigurierbaren System ist es daher möglich, Programminstanzen unterschiedlicher Programmierdomänen innerhalb einer Task zu mischen und gemeinsam zur Ausführung zu bringen. Damit werden die aus der IEC 61131-3 bekannten Ablaufmodelle auch für andere Domänen geöffnet.

Durch die Freiheitsgrade, die die Taskausführung mit der Steuereinrichtung 50 bietet, steigt jedoch auch die Komplexität bei der Konfiguration und Analyse. Daher bietet die Steuereinrichtung 50 integrierte Mechanismen für ein detailliertes Profiling basierend auf verfügbaren Erweiterungen des Echtzeitbetriebssystems. Der Benutzer erhält somit die Möglichkeit, unterschiedliche Eigenschaften der Taskausführung und des Betriebssystems zu beobachten, auszuwerten und aufzuzeichnen. Zu diesen Eigenschaften gehören unter anderem die Ausführungszeiten der Tasks und Programminstanzen, Häufigkeit der Taskverdrängungen, Latenz und Jitter, Systemauslastung oder Watchdog-Überwachungen. Diese Informationen können mit Hilfe von dynamischen Ringbuffern auch noch für Analysen post mortem nach einem Fehlerfall ausgewertet werden.

Zudem bietet die zentrale Ablage der Profiling-Informationen der Steuereinrichtung 50 die Möglichkeit, statistische Auswertungen durchzuführen oder diese Daten für weitere Analysen über entfernte Serverdienste zur Verfügung zu stellen.

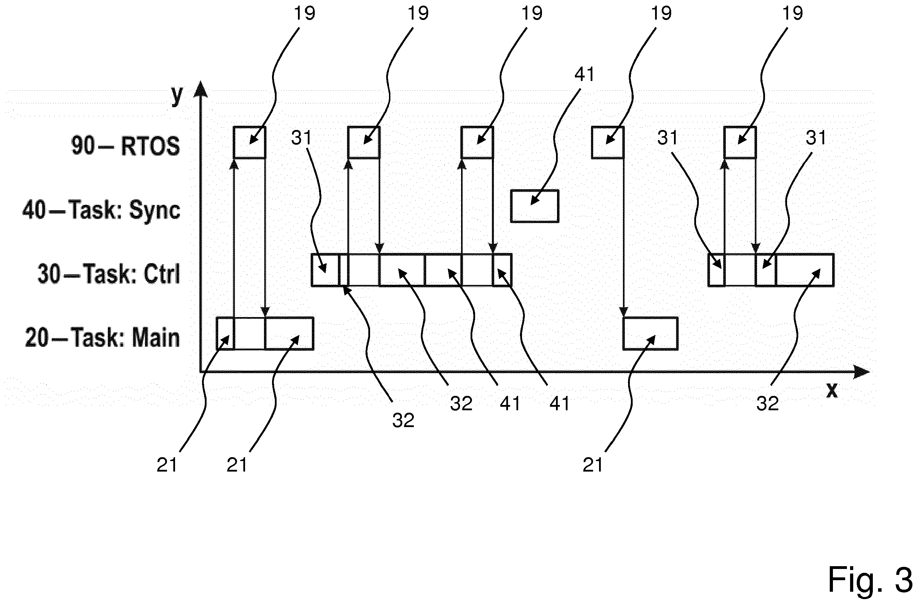

Fig. 3 zeigt ein Ausführungsbeispiel gemäß der vorliegenden Erfindung einer Steuerung eines Programmablaufs durch eine Steuereinrichtung 50. Die Steuereinrichtung 50 kann zur Durchführung einer Automatisierungsaufgabe auch auf Hilfsinstanzen zugreifen, wie einen Slave oder mehrere Slaves, wie in Fig. 2 gezeigt.

Fig. 3 zeigt in vereinfachter Darstellung eine Koordination bzw. Steuerung von Steueraufgaben durch eine Steuereinrichtung 50, wie sie beispielsweise in Fig. 2 dargestellt ist. Hierbei werden die beschriebenen Aufgaben 20, 30, 40 der Fig. 1 durch die Steuereinrichtung 50 gesteuert. Bei dieser Steuerung bzw. deren Auswertung kann eindeutig nachvollzogen werden kann, wann die einzelnen Programme und Aufgaben von höheren Prozessen verdrängt werden. Diese höheren Prozesse sind dem Betriebssystem vorbehalten und als OS-Prozesse 19 in Fig. 3 dargestellt.

Fig. 3 zeigt auf der x-Koordinate die Zeit und auf der y-Koordinate Prozesse bzw. Priorität des Prozesses. Somit hat, wie bereits zu Fig. 1 erläutert, die Aufgabe 20 die niedrigste Priorität und die Aufgabe 40 die höchste Priorität. Mit RTOS ist ein hochpriorer Thread 90 des Echtzeitbetriebssystem (RTOS) dargestellt, der die höchste Priorität aufweist. Der hochpriore Thread 90 bzw. hochpriore OS-Thead 90 ist demnach Teil des Echtzeitbetriebssystems.

Somit wird zeitlich zunächst die erste Aufgabe 20 mit dem Programmmodul 21 ausgeführt, was jedoch durch einen Echtzeitprozess 19 des Betriebssystems unterbrochen wird. Danach erfolgt die Abarbeitung der Aufgabe 30 mit den Programmmodulen 31 und 32. Im Anschluss daran wird die Aufgabe 40 mit dem Programmmodul 41 bearbeitet. Auch hier gibt es zeitliche Unterbrechungen der Programmmodule durch Echtzeitprozesse 19. Nach Abarbeitung der höherwertigen Prioritäten beginnt erneut die Aufgabe 20 und im Anschluss daran wird die Aufgabe 30 ausgeführt, so dass eine zyklische Bearbeitung der Aufgaben in Fig. 3 angedeutet wird.

Insgesamt wird erfindungsgemäß eine Funktionalität als Bestandteil einer neuen Firmwarearchitektur ermöglicht, auf deren Basis neue Industriesteuerungen realisiert werden. Realisiert ist diese Architektur zunächst für die Verwendung auf einem Gerät bzw. Steuergerät. Die Architektur ist jedoch so gestaltet, dass eine Erweiterung auf mehrere Geräte möglich ist. Dies ist zum Beispiel in einem Redundanzsystem der Fall, in dem zwei Steuerungen miteinander synchronisiert ablaufen.

Es wird hierbei angestrebt, die Ergänzung der klassischen Programmierung von Steuerungen um Hochsprachen zu unterstützen. Hierfür wird ein weicher Übergang zwischen der IEC 61131-3 und der Hochsprachenwelt angestrebt. Voraussetzung hierfür ist neben der Unterstützung solcher Sprachen auch die nahtlose Integration der unterschiedlichen Programmierdomänen. Hierzu zählen unter anderem Matlab/Simulink, C++, C#, JAVA, Python und die Sprachen der IEC 61131-3. Für eine solche nahtlose Integration sollte die Steuerung in der Lage sein, den aus der IEC 61131-3 bekannten Ablauf mit Programminstanzen und Aufgaben bzw. Tasks in den Ablauf der anderen Programmierdomänen zu übertragen. Trotz dieser komplexeren Anforderungen an die technische Realisierung werden zusätzlich Aspekte der Datensicherheit, Benutzbarkeit, Flexibilität und vor allem Leistungsfähigkeit gewährleistet.

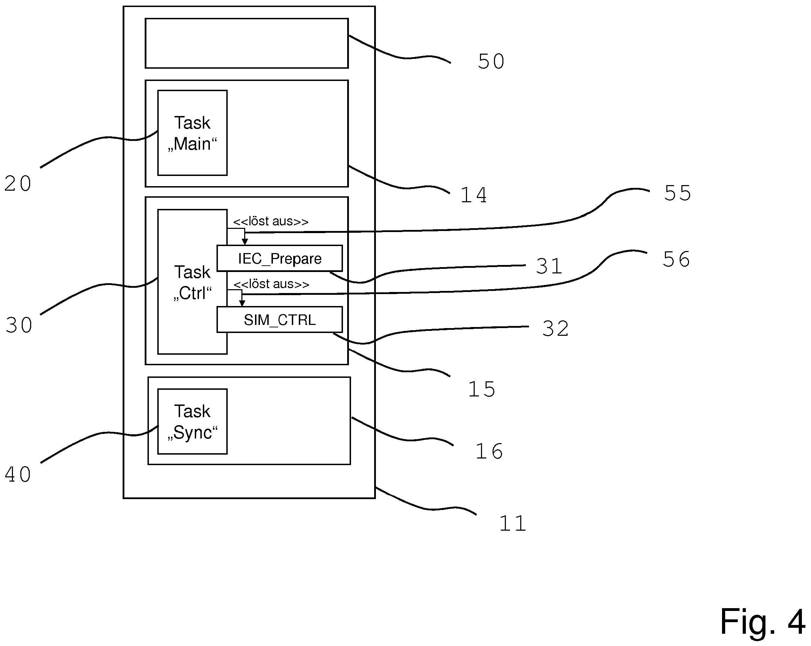

Fig. 4 zeigt ein Ausführungsbeispiel der vorliegenden Erfindung eines schematischen Aufbaus mit einer Steuereinrichtung 50. In diesem Ausführungsbeispiel ist ein Betriebssystem-Prozess bzw. OS-Prozess 11 dargestellt, der OS-Threads 14, 15, 16 aufweist.

Die erfindungsgemäße Vorgehensweise erlaubt die Komposition heterogener Taskinhalte. Dabei ist die Abarbeitungsreihenfolge innerhalb einer Aufgabe frei wählbar, nicht systembedingt vorgegeben und ein konsistenter Datenaustausch zwischen Programminstanzen möglich.

Die Konfiguration der Steuereinrichtung 50 und ihrer Aufgaben 20, 30, 40 erfolgt durch eine oder mehrere Beschreibungsdateien, hier in Form einer oder mehrerer XML-Dateien, die das Konfigurieren statt Programmieren erlauben. Damit kann die Funktion einer Anlage zur Laufzeit verändert werden, ohne dass die einzelnen Applikationsteile neu übersetzt werden müssen. Auch erlaubt es die Beschreibungsdatei bzw. die XMLbasierte Konfiguration dem Benutzer, Anpassungen direkt an der Steuerung vorzunehmen oder eigene externe Werkzeuge und Toolchains zu verwenden.

Der Aufbau der Beschreibungsdatei, insbesondere in Form einer XML-Datei, kann dabei durch klar definierte Schemadateien vorgegeben werden, welche eine schnelle Überprüfung der Konfiguration ermöglicht. Die Spezifikation von Aufgaben und den zugehörigen Programminstanzen in mehreren Beschreibungsdateien bzw. XML-Konfigurationsdateien erlaubt die Aufteilung der Gesamtapplikation 10 in funktionale Module, die von unterschiedlichen Entwicklergruppen oder Zulieferern erstellt werden können. Dies erleichtert nicht nur die Entwicklung einer komplexen Anlagensteuerung, sondern auch die schrittweise Erweiterung einer laufenden Anlage. Somit muss die Gesamtapplikation 10 nicht von Anfang an zur Verfügung stehen, sondern kann aus Teilmodulen komponiert werden.

Jeder Aufgabe 20, 30, 40 lässt sich zusätzlich durch die Definition von Parametern in der Beschreibungsdatei bzw. XML-Datei auf einen Prozessorkern, eine Gruppe oder auf allen Prozessorkernen der Steuerung zuordnen. Von der Aufgabe 30 werden Auslösebefehle ("löst aus") jeweils an die Programmmodule 31, 32 über die Kommunikationsverbindungen 55, 56 gesendet, wobei die Kommunikation innerhalb eines OS-Threads stattfindet.

Das in Fig. 4 dargestellte Ausführungsbeispiel ermöglicht vorteilhaft die Ausführung der Programmmodule in einem einzigen gemeinsamen OS-Prozess, wobei die Programmodule mit unterschiedlichen Programmiersprachen erstellt sein können.

Die oben im Zusammenhang mit dem in Fig. 2 dargestellten Ausführungsbeispiel angegebenen Vorteile und Ausgestaltungen, abgesehen von denen, welche den Master/Slave-Aspekt betreffen, gelten auch für das in Fig. 4 dargestellte Ausführungsbeispiel.

Nachfolgend ist beispielhaft ein möglicher Inhalt einer Beschreibungsdatei in XML-Format angegeben:

```
 <?xml version="1.0" encoding="UTF-8"?>
 <EsmConfigurationDocument>
 <EsmComponentSettings>
 <SharedDataSettings Size="1024" />
 </EsmComponentSettings>
 <EsmList>
 <Esm Name="ESM0" CpuAffinity="0" Timerlnterval="500us"
 TaskSchedulerMode="IntervalCounting" />
 <Esm Name="ESMI" CpuAffinity="I" Timerlnterval="100us"
 TaskSchedulerMode="SystemClock"/>
 </EsmList>
 <Tasks>
 <Task Name="TaskCount" CycleTime="500us" TaskType="Cyclic" TaskPriority="4" />
 <Task Name="TaskConf" CycleTime="250ms" TaskType="Cyclic" TaskPriority="5" />
 <Task Name="TaskMain" CycleTime="10ms" TaskType="Cyclic" TaskPriority="7" />
 </Tasks>
 <EsmTaskRelations>
 <EsmTaskRelation ESMName="ESM0' TaskName="TaskCount" />
 <EsmTaskRelation ESMName="ESM0' TaskName="TaskConf" />
 <EsmTaskRelation ESMName="ESMI' TaskName="TaskMain" />
 </Esm TaskRelations>
 <Programs>
 <Program Name="CppCounter-1" ProgramType="CppCounter"
 ComponentName="Arp.Demonstrator.CppCounter-1" />
 <Program Name="CppConfig-1" ProgramType="CppConfig"
 ComponentName="Arp.Demonstrator.CppConfig-1" />
 <Program Name="PizController-l' ProgramType="PizController'
 ComponentName="Arp.Demonstrator.PizController-1 " />
 <Program Name="SimHeli-I" ProgramType="SimHeli"
 ComponentName="Arp.Demonstrator.SimHeli-1" />
 </Programs>
 <TaskProgramRelations>
 <TaskProgramRelation TaskName="TaskCount"
 ProgramName="Arp.Demonstrator.CppCounter-1/CppCounter-1" Order="0" />
 <TaskProgramRelation TaskName="TaskConf"
 ProgramName="Arp.Demonstrator.CppConfig-I/CppConfig-1" Order="0" />
 <TaskProgramRelation TaskName="TaskMain"
 ProgramName="Arp.Demonstrator.PizController-I/PizController-1" Order="0" />
 <TaskProgramRelation TaskName="TaskMain"
 ProgramName="Arp.Demonstrator.SimHeli-1.SimHeli-1" Order="1" />
 </TaskProgramRelations>
 </EsmConfigurationDocument>
```

### Bezugszeichenliste

- 10: Gesamtapplikation
- 11: OS-Prozess
- 12: OS-Prozess
- 13: OS-Prozess
- 14: OS-Thread
- 15: OS-Thread
- 16: OS-Thread
- 17: OS-Thread
- 18: OS-Thread
- 19: OS-Prozess
- 20: Aufgabe bzw. Task
- 21: Programmmodul
- 30: Aufgabe bzw. Task
- 31: Programmmodul
- 32: Programmmodul
- 33: Prozedurende
- 34: Kommunikationsschnittstelle
- 40: Aufgabe bzw. Task
- 41: Programmmodul
- 50: Steuereinrichtung bzw. ESM
- 51: Wirkverbindung
- 52: Wirkverbindung
- 53: Kommunikationsverbindung
- 54: Kommunikationsverbindung
- 55: Kommunikationsverbindung
- 56: Kommunikationsverbindung
- 57: Kommunikationsverbindung
- 58: Kommunikationsverbindung
- 60: Steuerungseinrichtung bzw. ESM als erster Slave
- 70: Steuerungseinrichtung bzw. ESM als zweiter Slave
- 80: OS-Prozess
- 90: hochpriorer OS-Thread

## Patentansprüche

1. Verfahren zur Ablaufsteuerung von Programmmodulen (21, 31, 32, 41), wobei die Programmmodule auf einem Steuergerät in einer Automatisierungsanlage ausgeführt werden, und wobei die Programmmodule Teil einer Steuerungsapplikation zur Ausführung auf dem Steuergerät sind, und wobei das Steuergerät zur Steuerung eines Automatisierungssystems durch Ausführen der Steuerungsapplikation ausgebildet ist, wobei das Ausführen der Steuerungsapplikation das Ausführen der Programmmodule umfasst, umfassend
Bereitstellen einer Steuereinrichtung (50), wobei die Steuereinrichtung einen Teil der Firmware des Steuergerätes bildet,
Bereitstellen mehrerer Programmmodule (21, 31, 32, 41), die von einem Echtzeitbetriebssystem ausführbar sind,
Bereitstellen einer Konfigurationsdatei, aufweisend eine Konfiguration zur Steuerung eines Programmablaufs, wobei die Konfiguration zu ausgewählten Programmmodulen jeweils eine Identifikation und zugeordnete Informationen zur Ausführung des jeweils identifizierten Programmmoduls umfasst, Auswerten der in der Konfigurationsdatei enthaltenen Informationen durch die Steuereinrichtung, und
Ablaufsteuerung der ausgewählten Programmmodule durch Ausführen der ausgewählten Programmmodule (21, 31, 32, 41) durch die Steuereinrichtung (50) in Abhängigkeit der in der Konfigurationsdatei angegebenen Informationen, wobei die Inhalte der Konfigurationsdatei vorgeben, welche der ausgewählten Programmmodule in welcher Reihenfolge und in Abhängigkeit welches Ereignisses oder in welchen Zeitintervallen von der Steuereinrichtung ausgeführt werden.

2. Verfahren nach Anspruch 1,
ferner aufweisend
mehrfaches Ausführen wenigstens eines der Programmmodule (21, 31, 32, 41) durch die Steuereinrichtung (50).

3. Verfahren nach Anspruch 1 oder Anspruch 2,
**dadurch gekennzeichnet, dass**
die Steuereinrichtung (50) dazu ausgebildet ist, wenigstens einige der Programmmodule (21, 31, 32, 41) derart auszuführen, dass sie in unterschiedlichen von dem Echtzeitbetriebssystem verwalteten Prozessen ausführbar sind.

4. Verfahren nach Anspruch 3,
**dadurch gekennzeichnet, dass**
das Echtzeitbetriebssystem dazu ausgebildet ist, die Prozesse und/oder Programmmodule (21, 31, 32, 41) in Abhängigkeit vorbestimmter Prioritäten auszuführen.

5. Verfahren nach Anspruch 4,
ferner aufweisend
Aufzeichnen und Auswerten der Ablaufsteuerung durch das Echtzeitbetriebssystem.

6. Verfahren nach einem der vorstehenden Ansprüche,
ferner aufweisend
Ändern der Ablaufsteuerung durch Hinzufügen oder Entfernen von Programmmodulen, ohne dass ein Neustart eines Steuerungssystems durchgeführt wird.

7. Verfahren nach einem der vorstehenden Ansprüche,
ferner aufweisend
Aufteilen der Ablaufsteuerung auf verschiedene Prozesse.

8. Verfahren nach einem der vorstehenden Ansprüche,
ferner aufweisend
Erstellen einer Statistikauswertung unter Verwendung von Profiling-Informationen.

9. Verfahren nach einem der vorstehenden Ansprüche,
ferner aufweisend
Einbringen von mindestens einer Aufzeichnungsmarkierung in ein Programmmodul (21, 31, 32, 41) zum Bereitstellen einer Applikationsdiagnose.

10. Verfahren nach einem der vorstehenden Ansprüche,
ferner aufweisend
Verwenden der Steuereinrichtung (50) als Master und
Bereitstellen mindestens einer weiteren Steuereinrichtung (60, 70) als Slave, die der Steuereinrichtung (50) als Master untergeordnet ist.

11. Verfahren nach einem der vorstehenden Ansprüche,
ferner aufweisend
Zuweisen einzelner in der Konfigurationsdatei definierter Aufgaben an Programmmodule (21, 31, 32, 41) durch die Steuereinrichtung (50).

12. Steuergerät zur Steuerung eines Automatisierungssystems, aufweisend einen Prozessor,
einen Speicher,
mindestens eine Schnittstelle zu einer Automatisierungseinrichtung, und eine Firmware, welche eine Steuereinrichtung (50) umfasst,
wobei die Steuereinrichtung (50) dazu ausgebildet ist,
in einer Konfigurationsdatei enthaltene Informationen auszuwerten, wobei die Konfigurationsdatei zu mehreren von einem Echtzeitbetriebssystem ausführbaren Programmmodulen (21, 31, 32, 41) jeweils eine Identifikation und zugeordnete Informationen zur Ausführung des jeweils identifizierten Programmmoduls umfasst, und wobei die Inhalte der Konfigurationsdatei vorgeben, welche der ausgewählten Programmmodule in welcher Reihenfolge und in Abhängigkeit welches Ereignisses oder in welchen Zeitintervallen von der Steuereinrichtung ausgeführt werden, und
eine Ablaufsteuerung der Programmmodule durch Ausführen der Programmmodule (21, 31, 32, 41) in Abhängigkeit der in der Konfigurationsdatei angegebenen Informationen auszuführen, wobei die Programmmodule auf dem Steuergerät in einer Automatisierungsanlage ausgeführt werden, und wobei die Programmmodule Teil einer Steuerungsapplikation zur Ausführung auf dem Steuergerät sind, und wobei die Konfigurationsdatei in dem Speicher des Steuergerätes hinterlegt ist, und wobei das Steuergerät zur Steuerung des Automatisierungssystems durch Ausführen der Steuerungsapplikation ausgebildet ist, wobei das Ausführen der Steuerungsapplikation das Ausführen der Programmmodule umfasst.

13. Computerprogrammprodukt mit Programmcodemitteln, die bewirken, dass das Steuergerät nach Anspruch 12 das Verfahren nach einem der Ansprüche 1 bis 11 ausführt.

14. Datenträger, auf dem das Computerprogrammprodukt nach Anspruch 13 gespeichert ist.

## Claims

1. A method for sequence control of program modules (21, 31, 32, 41), wherein the program modules are executed on a control device in an automation system, and wherein the program modules form part of a control application for execution on said control unit, and wherein the control device is adapted for controlling an automation system by executing the control application, wherein the executing of the control application comprises the executing of the program modules, comprising providing a control means (50), the control means forming part of the firmware of the control device;
providing a plurality of program modules (21, 31, 32, 41) that can be executed by a real-time operating system;
providing a configuration file that has a configuration for controlling a program sequence, wherein, for selected program modules, the configuration comprises a respective identifier and associated information for executing the respective identified program module;
evaluating the information contained in the configuration file by the control means; and
sequence control of the selected program modules by executing the selected program modules (21, 31, 32, 41) by the control means (50) on the basis of the information specified in the configuration file, wherein the contents of the configuration file specify which one of the selected program modules are to be executed by the control means in which order and depending on which event or in which time intervals.

2. The method according to claim 1, further comprising
repeated execution of at least one of the program modules (21, 31, 32, 41) by the control means (50).

3. The method according to claim 1 or claim 2, **characterised in that**
the control means (50) is adapted to execute at least some of the program modules (21, 31, 32, 41) in such a way that they are executable in different processes managed by the real-time operating system.

4. The method according to claim 3, **characterised in that**
the real-time operating system is adapted for executing the processes and/or program modules (21, 31, 32, 41) on the basis of predetermined priorities.

5. The method according to claim 4, further comprising
logging and evaluating the sequence control by the real-time operating system.

6. The method according to any one of the preceding claims, further comprising changing the sequence control by adding or removing program modules without restarting a control system.

7. The method according to any one of the preceding claims, further comprising distributing the sequence control to different processes.

8. The method according to any one of the preceding claims, further comprising creating a statistical analysis using profiling information.

9. The method according to any one of the preceding claims, further comprising introducing at least one record mark into a program module (21, 31, 32, 41) to provide an application diagnosis.

10. The method according to any one of the preceding claims, further comprising using the control means (50) as a master; and
providing at least one further control means (60, 70) as a slave which is subordinate to the master control means (50).

11. The method according to any one of the preceding claims, further comprising assigning individual tasks as defined in the configuration file to program modules (21, 31, 32, 41), by the control means (50).

12. A control device for controlling an automation system, comprising
a processor;
a memory;
at least one interface to an automation device; and
a firmware comprising a control means (50);
wherein the control means (50) is adapted
to evaluate information contained in a configuration file, wherein the configuration file comprises, for a plurality of program modules (21, 31, 32, 41) that can be executed by a real-time operating system, respective identifier and associated information for executing the respective identified program module, and wherein the contents of the configuration file specify which of the selected program modules are executed by the control means in which order and in response to which event or at which time intervals; and
to execute a sequence control of the program modules by executing the program modules (21, 31, 32, 41) on the basis of the information specified in the configuration file, wherein the program modules are executed on the control device in an automation system, and wherein the program modules form part of a control application for execution on said control device, and wherein the configuration file is stored in the memory of the control device, and wherein the control device is adapted for controlling the automation system by executing the control application, wherein the executing of the control application comprises the executing of the program modules.

13. A computer program product comprising program code means which cause the control device of claim 12 to execute the method according to any one of claims 1 through 11.

14. A data carrier which stores the computer program product of claim 13.

## Revendications

1. Procédé destiné à commander le déroulement de modules de programme (21, 31, 32, 41), dans lequel les modules de programme sont exécutés sur un appareil de commande dans une installation d'automatisation, et dans lequel les modules de programme font partie d'une application de commande à exécuter sur l'appareil de commande, et dans lequel l'appareil de commande est conçu pour commander un système d'automatisation par exécution de l'application de commande, dans lequel l'exécution de l'application de commande comprend l'exécution des modules de programme, comprenant les étapes consistant en
la fourniture d'un équipement de commande (50), où l'équipement de commande constitue une partie du micrologiciel de l'équipement de commande,
la fourniture de plusieurs modules de programme (21, 31, 32, 41) qui peuvent être exécutés par un système d'exploitation en temps réel,
la fourniture d'une donnée de configuration, présentant une configuration pour commander un déroulement de programme, où la configuration pour des modules de programme sélectionnés comprend respectivement une identification et des informations attribuées pour exécuter le module de programme respectivement identifié,
l'analyse des informations contenues dans la donnée de configuration par l'équipement de commande, et
la commande de déroulement des modules de programme sélectionnés par l'exécution des modules de programme (21, 31, 32, 41) sélectionnés par l'équipement de commande (50) en fonction des informations données dans la donnée de configuration, où les contenus des données de configuration prédéfinissent lesquels des modules de programme sélectionnés sont exécutés dans quel ordre et en fonction de quel résultat ou dans quels intervalles de temps par l'équipement de commande.

2. Procédé selon la revendication 1, présentant en outre
l'exécution multiple d'au moins l'un des modules de programme (21, 31, 32, 41) par l'équipement de commande (50).

3. Procédé selon la revendication 1 ou la revendication 2, **caractérisé en ce que**
l'équipement de commande (50) est conçu pour exécuter au moins certains des modules de programme (21, 31, 32, 41) de sorte qu'ils puissent être exécutés dans des processus différents administrés par le système d'exploitation en temps réel.

4. Procédé selon la revendication 3, **caractérisé en ce que**
le système d'exploitation en temps réel est conçu pour exécuter les processus et/ou les modules de programme (21, 31, 32, 41) en fonction de priorités prédéterminées.

5. Procédé selon la revendication 4, présentant en outre
l'enregistrement et l'analyse de la commande de déroulement par le système d'exploitation en temps réel.

6. Procédé selon l'une des revendications précédentes, présentant en outre
la modification de la commande de déroulement par ajout ou retrait de modules de programme sans qu'un redémarrage d'un système de commande ne soit exécuté.

7. Procédé selon l'une des revendications précédentes, présentant en outre
la répartition de la commande de déroulement entre plusieurs processus.

8. Procédé selon l'une des revendications précédentes, présentant en outre
l'établissement d'une analyse statistique en utilisant des informations de profilage.

9. Procédé selon l'une des revendications précédentes, présentant en outre
l'introduction d'au moins une marque d'enregistrement dans un module de programme (21, 31, 32, 41) pour fournir un diagnostic d'application.

10. Procédé selon l'une des revendications précédentes, présentant en outre
l'utilisation de l'équipement de commande (50) en tant que maître et
la fourniture d'au moins un autre équipement de commande (60, 70) en tant qu'esclave, qui est subordonné à l'équipement de commande (50) en tant que maître.

11. Procédé selon l'une des revendications précédentes, présentant en outre
l'assignation de consignes individuelles définies dans la donnée de configuration à des modules de programme (21, 31, 32, 41) par l'équipement de commande (50).

12. Appareil de commande destiné à commander un système d'automatisation, présentant
un processeur,
une mémoire,
au moins une interface pour un équipement d'automatisation, et
un micrologiciel, lequel comprend un équipement de commande (50),
dans lequel l'équipement de commande (50) est conçu pour
analyser des informations contenues dans une donnée de configuration, où la donnée de configuration pour plusieurs modules de programme (21, 31, 32, 41) pouvant être exécutés par un système d'exploitation en temps réel comprend respectivement une identification et des informations attribuées pour exécuter le module de programme respectivement identifié, et où les contenus de la donnée de configuration prédéfinissent lesquels des modules de programme sélectionnés sont exécutés dans quel ordre et en fonction de quel résultat ou dans quels intervalles de temps par l'équipement de commande, et
une commande de déroulement des modules de programme par l'exécution des modules de programme (21, 31, 32, 41) à exécuter en fonction des informations données dans la donnée de configuration, où les modules de programme sont exécutés sur l'appareil de commande dans une installation d'automatisation, et où les modules de programme font partie d'une application de commande à exécuter sur l'appareil de commande, et où la donnée de configuration est déposée dans la mémoire de l'appareil de commande, et où l'appareil de commande est conçu pour commander le système d'automatisation par exécution de l'application de commande, où l'exécution de l'application de commande comprend l'exécution des modules de programme.

13. Produit de programme informatique avec des moyens de code de programme qui amènent l'appareil de commande selon la revendication 12 à exécuter le procédé selon l'une des revendications 1 à 11.

14. Support de données sur lequel le produit de programme informatique selon la revendication 13 est stocké.
